# EUROPÄISCHE PATENTANMELDUNG

(11) **EP 3 561 931 A1**
(43) Veröffentlichungstag der Anmeldung: **30.10.2019**
(21) Anmeldenummer: 18169514.9
(22) Anmeldetag: 26.04.2018
(51) Int. Cl.: H01M 8/18, H01M 8/04029, H01M 8/04186, H01M 8/04276

(54) **REDOX-FLOW-BATTERIE UND VERFAHREN ZUM BETREIBEN EINER REDOX-FLOW-BATTERIE**

(71) Anmelder: Siemens Aktiengesellschaft, 80333 München (DE)
(72) Erfinder: Fleck, Robert, 91325 Adelsdorf (DE); Schricker, Barbara, 91058 Erlangen (DE); Wolfschmidt, Holger, 91058 Erlangen (DE)

(57) **Zusammenfassung**

Die Erfindung betrifft ein Verfahren zum Betreiben einer Redox-Flow-Batterie und eine Redox-Flow-Batterie. Die Redox-Flow-Batterie umfasst eine erste Kammer und eine zweite Kammer, wobei die erste Kammer von der zweiten Kammer von einer Membran getrennt ist. Die erste Kammer umfasst eine Kathode. Die zweite Kammer umfasst eine Anode. In der ersten Kammer liegt ein flüssiger Katholyt vor, in der zweiten Kammer liegt ein flüssiger Anolyt vor. Es erfolgt ein thermisches Beladen oder Entladen des Katholyts und/oder des Anolyt mittels eines Prozesses. Die in dem Elektrolyten gespeicherte Wärmemenge oder Kältemenge wird zu einem Prozess übertragen. Die Redox-Flow-Batterie umfasst weiterhin eine Wärmeübertragungseinheit.

## Beschreibung

Die Erfindung betrifft eine Redox-Flow-Batterie und ein Verfahren zum Betreiben einer Redox-Flow-Batterie.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Batterien sind Speicher für elektrische Energie auf elektrochemischer Basis und geeignet, die überschüssige Energie zu speichern. Handelt es sich um einen wiederaufladbaren Speicher wird dieser auch Akkumulator genannt. Ein einzelnes wiederaufladbares Speicherelement wird auch Sekundärelement genannt.

Bei Redox-Flow-Batterien ist, im Unterschied zu klassischen Sekundärelementen, das elektrodenaktive Material flüssig. Dieser flüssige Elektrolyt wird in einem Tank gelagert und in einen Kathodenraum mit einer Kathode und/oder in einen Anodenraum mit einer Anode gepumpt. Kathodenraum und Anodenraum werden typischerweise durch eine Membran voneinander getrennt. An den Elektroden wird das elektrodenaktive Material reduziert, beziehungsweise oxidiert. Der flüssige Elektrolyt umfasst als Energieträger, oder in anderen Worten als elektrodenaktives Material, zweckmäßigerweise ein Reduktions-Oxidations-Paar.

Redox-Flow-Batterien haben typischerweise Temperaturfenster, innerhalb derer die Elektrolyten und der Energieträger optimal arbeiten. Damit dieses Temperaturfenster eingehalten wird, ist meist eine Heiz- und/oder eine Kühlvorrichtung nötig. Nachteiligerweise benötigen beide Vorrichtungen Energie und senken somit die Effizienz und damit auch den Wirkungsgrad der Redox-Flow-Batterie.

Es ist daher Aufgabe der vorliegenden Erfindung eine Redox-Flow-Batterie und ein Verfahren zum Betreiben einer Redox-Flow-Batterie anzugeben, welche einen verbesserten Wirkungsgrad aufweisen.

Die Aufgabe wird mit einem Verfahren gemäß Anspruch 1 und einer Redox-Flow-Batterie gemäß Anspruch 12 gelöst.

Das erfindungsgemäße Verfahren zum Betreiben einer Redox-Flow-Batterie umfasst zunächst das Bereitstellen einer Redox-Flow-Batterie umfassend eine erste Kammer und eine zweite Kammer, wobei die erste Kammer von der zweiten Kammer von einer Membran getrennt ist und wobei die erste Kammer eine Kathode umfasst und die zweite Kammer eine Anode umfasst. In der ersten Kammer liegt ein flüssiger Katholyt vor. In der zweiten Kammer liegt ein flüssiger Anolyt vor. Erfindungsgemäß wird die Redox-Flow-Batterie in einem Temperaturbereich mit einer ersten unteren Temperatur und einer zweiten oberen Temperatur betrieben. In diesem Temperaturbereich erfolgt dann das thermische Beladen oder Entladen des Katholyts und/oder des Anolyt mittels eines Prozesses.

In anderen Worten heißt das, dass ein Entladen erfolgt, wenn der Prozess ein Heizprozess ist. Die Wärmemenge, welche aufgrund der Temperatur des Katholyt und/oder des Anolyt vorhanden ist, wird dann wenigstens teilweise zu dem Prozess übertragen. Ein thermisches Beladen des Katholyts und/oder Anolyts bedeutet, dass der Prozess ein Kühlprozess ist. Es wird also aus einem anderen System in dem der Prozess abläuft Wärme entnommen und in die Redox-Flow-Batterie übertragen. Die Redox-Flow-Batterie ist demnach vorteilhaft nicht nur ein elektrischer Speicher, sondern auch ein thermischer Speicher. Der thermische Speicher kann dabei als ein Kältespeicher oder als ein Wärmespeicher ausgestaltet sein.

Die erfindungsgemäße wiederaufladbare Redox-Flow-Batterie umfasst eine erste Kammer und eine zweite Kammer. Die erste Kammer ist von der zweiten Kammer durch eine Membran getrennt, wobei die erste Kammer eine Kathode umfasst und die zweite Kammer eine Anode umfasst. In der ersten Kammer liegt ein flüssiger Katholyt vor. In der zweiten Kammer liegt ein flüssiger Anolyt vor. Die Redox-Flow-Batterie ist geeignet, bei Temperaturen in einem Temperaturbereich mit einer ersten unteren Temperatur und einer zweiten oberen Temperatur betrieben zu werden. Die Redox-Flow-Batterie umfasst weiterhin eine Wärmeübertragungsvorrichtung zum Übertragen der in der Redox-Flow-Batterie entstehenden Wärme an einen Prozess.

Vorteilhaft wird nicht nur die elektrische Energie, welche in der Redox-Flow-Batterie gespeichert werden kann, genutzt, sondern auch die Wärme, die in der Redox-Flow-Batterie gespeichert ist, wird in einem weiteren Prozess genutzt. Somit wird der Wirkungsgrad der Redox-Flow-Batterie erhöht, wenn ein Aufheizen des Katholyts und/oder des Anolyts innerhalb des Temperaturbereichs zur zweiten oberen Temperatur erfolgt, da die Wärme wiederum in dem weiteren Prozess genutzt wird, so dass die Temperatur zur ersten unteren Temperatur hin sinkt. Alternativ dient die Redox-Flow-Batterie als Kühlspeicher, und nimmt Wärme aus einem anderen Prozess auf. Hierbei ist von Vorteil. Dass die erfindungsgemäße Redox-Flow-Batterie in einem Temperaturbereich arbeiten kann.

Die Redox-Flow-Batterie wird in dem gesamten Temperaturbereich betrieben. In anderen Worten heißt das, dass das Aufheizen nicht bis zu einer Temperatur von exakt der zweiten oberen Temperatur erfolgen muss, sondern zweckmäßigerweise lediglich oberhalb der ersten Temperatur liegen sollte. Analog sollte die Temperatur der Redox-Flow-Batterie nach dem Abkühlen zweckmäßigerweise unterhalb der zweiten oberen Temperatur liegen, muss aber nicht genau der ersten unteren Temperatur entsprechen.

Ein zusätzliches externes Kühlen der Redox-Flow-Batterie mittels einer Kühlvorrichtung ist vorteilhaft nicht nötig.

In einer vorteilhaften Ausgestaltung der Erfindung beträgt die erste untere Temperatur 20 °C und die zweite obere Temperatur 40 °C. Besonders bevorzugt liegt der Temperaturbereich zwischen einer unteren Temperatur von 10 °C und einer oberen Temperatur von 70 °C. Unterhalb von 10 °C verschlechtert sich der Wirkungsgrad der Redox-Flow-Batterie deutlich. Bei über 70 °C besteht die Gefahr, dass das System instabil wird. Aus thermischer Sicht ist die der Elektrolyt bei der ersten unteren Temperatur entladen und bei der zweiten oberen Temperatur geladen.

In einer weiteren vorteilhaften Ausgestaltung der Erfindung beträgt die erste untere Temperatur 40 °C und die zweite obere Temperatur 60 °C.

In einer weiteren vorteilhaften Ausgestaltung der Erfindung beträgt die erste untere Temperatur 50 °C und die zweite obere Temperatur 70 °C.

In einer vorteilhaften Ausgestaltung und Weiterbildung der Erfindung wird als Energieträger ein Polyoxometallat verwendet. Dieser Energieträger ermöglicht Betriebstemperaturen oberhalb von 10°C, insbesondere auch oberhalb von 20 °C oder 30 °C. Es ist so möglich, den Elektrolyt mit dem Energieträger aufzuheizen, sodass zusätzlich zur elektrischen Energie in dem Elektrolyt auch thermische Energie gespeichert werden kann. Diese thermische Energie kann dann in dem Prozess weiterverwendet werden. Das erhöht den Wirkungsgrad der Redox-Flow-Batterie deutlich.

Zweckmäßigerweise sollte der Energieträger, also das Reduktions-Oxidations-Paar, welches im Elektrolyt eingesetzt wird, ein Arbeits-Temperaturfenster oberhalb von 10 °C, insbesondere oberhalb von 20 °C, aufweisen, um einen optimalen Betrieb zu gewährleisten.

Weiterhin haben hohe Betriebstemperaturen bei einer Redox-Flow-Batterie zusätzliche Vorteile: zum einen ermöglichen höhere Temperaturen eine schnellere Kinetik der Redox-Reaktion. Weiterhin führen höhere Betriebstemperaturen geringeren Diffusionsverlusten, einer niedrigeren Viskosität des Elektrolyts und geringeren Druckverlusten im Vergleich zu niedrigen Betriebstemperaturen. Vorteilhaft ermöglicht dies ebenso eine Steigerung des Wirkungsgrades der Batterie.

Als Prozess, welcher thermisch mit der Redox-Flow-Batterie verbunden ist, können typischerweise Heizvorgänge, insbesondere Fernwärme oder eine direkte Beheizung eines Gebäudes erfolgen. Ebenso ist denkbar bei kalten Umgebungstemperatur eine Solarthermieanlage zu heizen, um ein einfrieren zu verhindern. Es ist ebenso denkbar eine Photovoltaikanlage, welche bei deutlich höheren Temperaturen betrieben wird, durch die Temperatur des Elektrolyts zu kühlen, um deren Wirkungsgrad möglichst hoch zu erhalten. In anderen Worten heißt das, dass ein Wärmeaustausch der Redox-Flow-Batterie sowohl während des Aufheizens als auch während des Abkühlens des Elektrolyts erfolgen kann in Abhängigkeit davon, ob der Prozess selbst ein Abkühlen oder Aufheizen darstellt.

Der Temperaturbereich kann mittels Polyoxometallat als Energieträger in einer Redox-Flow-Batterie ermöglicht werden, da das Polyoxometallat bei diesen Temperaturen stabil ist. Die Höhe der optimalen Betriebstemperatur des thermischen Speichers hängt von mehreren Faktoren ab: Einerseits von der zur Verfügung stehenden Energie, insbesondere auch von der Wärmemenge, welche in dem Elektrolyt gespeichert werden soll. Weiterhin von der elektrischen Energiemenge, welche in der Redox-Flow-Batterie elektrisch oder als Wärme gespeichert werden soll. Weiterhin ist von Interesse, bei welcher Temperatur der Prozess die Wärmemenge, welche im Elektrolyt gespeichert ist, verbraucht. In Abhängigkeit dieser Faktoren wird die erste untere Temperaturgrenze für das Betreiben der Redox-Flow-Batterie ausgewählt. Bei all diesen Temperaturgrenzen wird aber der Wirkungsgrad der Redox-Flow-Batterie deutlich erhöht, da keine Kühlung notwendig ist und die Wärme in einem Prozess verwendet wird.

In einer vorteilhaften Ausgestaltung und Weiterbildung der Erfindung wird der Elektrolyt der Redox-Flow-Batterie durch ein Heizverfahren erwärmt, welches mit elektrischer Überschussenergie betrieben wird. Als elektrische Überschussenergie wird hier insbesondere erneuerbare Energie bezeichnet, welche in Zeiten von viel Wind und viel Sonne im elektrischen Stromnetz vorhanden ist, aber zu dem Zeitpunkt nicht ausreichend Verbraucher zur Verfügung stehen. Es ist dann zu diesen Zeiten möglich, die elektrische Überschussleistung nicht nur als elektrische Energie in der Redox-Flow-Batterie zu speichern, sondern diese auch zusätzlich aufzuheizen, um die Energie ebenso thermisch in der Redox-Flow-Batterie zu speichern.

In einer weiteren vorteilhaften Ausgestaltung und Weiterbildung der Erfindung ist die Wärmeübertragungsvorrichtung der Redox-Flow-Batterie ein Wärmetauscher, wobei der Wärmetauscher fluidisch mit der ersten Kammer und/oder der zweiten Kammer verbunden ist. In anderen Worten heißt das, dass der Wärmetauscher direkt mit dem Elektrolyt als Wärmeaustauschmedium betrieben wird. Dies ermöglicht vorteilhaft eine besonders effiziente Wärmeübertragung des Elektrolyts an einen Prozess. Vorteilhafterweise wird der Wirkungsgrad der Redox-Flow-Batterie somit erhöht.

In einer weiteren vorteilhaften Ausgestaltung und Weiterbildung der Erfindung liegt das Volumen der ersten und/oder zweiten Kammer in einem Bereich von 0,2 m³ bis 1.000.000 m³, insbesondere in einem Bereich von 0,5 m³ bis 100.000 m³. Die Redox-Flow-Batterie kann also als eine Hausanlage in einem Einfamilienhaus ausgelegt sein. Die Kapazität einer solchen Anlage liegt insbesondere in einem Bereich von 5kWh bis 30 kWh. Es ist aber ebenso möglich, die Redox-Flow-Batterie derart auszulegen, dass als Speichertanks Kavernen verwendet werden, womit die Versorgung wenigstens eines Stadtteils über Fernwärme ermöglicht werden. Weiterhin ermöglichen solch große Volumen das Speichern einer sehr großen Menge an Überschussenergie. Die Kapazität einer solchen Anlage liegt insbesondere in einem Bereich von wenigstens 100 MWh, insbesondere 500 MWh, besonders bevorzugt wenigstens 700 MWh. Vorteilhaft wird für all diese Volumina der Wirkungsgrad erhöht, da Leistungen sowohl elektrisch als auch in Form von Wärme gespeichert wird. Für die Redox-Flow-Batterie als elektrischen Speicher geht eine Temperaturerhöhung mit einer Erhöhung des Wirkungsgrades einher. Zusätzlich liegt Vorteil einer zusätzlichen Nutzung der Tanks als thermische Speicher darin, dass man die bestehenden Komponenten doppelt nutzt und somit Installationskosten spart. Im Haushalt wird beispielsweise auch thermische Energie und somit thermische Speicher benötigt, also eine Sektorkopplung betrieben.

Weitere Merkmale, Eigenschaften und Vorteile der vorliegenden Erfindung ergeben sich aus der nachfolgenden Beschreibung unter Bezugnahme auf die beiliegende Figur. Die Figur zeigt schematisch eine Redox-Flow-Batterie mit einem Heizelement und Wärmetauscher.

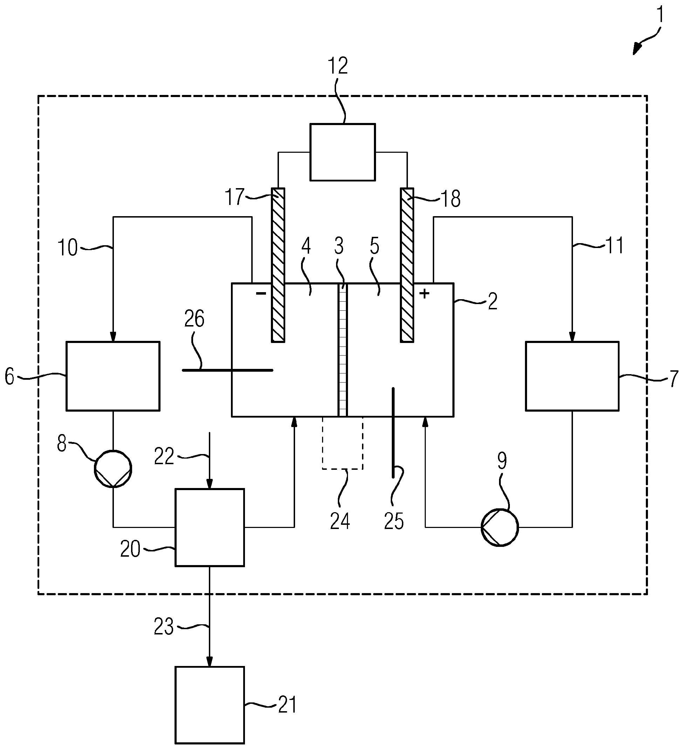

Figur 1 zeigt eine Redox-Flow-Batterie 1 und einer Heizung 21. Die Redox-Flow-Batterie 1 umfasst eine Redox-Flow-Einheit 2 mit einer ersten Kammer 4 und einer zweiten Kammer 5. Die erste Kammer 4 wird von der zweiten Kammer 5 durch eine Membran 3 getrennt. Die erste Kammer 4 umfasst eine Kathode 17. Die zweite Kammer 5 umfasst eine Anode 18. Die Kathode 17 und die Anode 18 sind über eine Elektroenergieanbindung 12 an ein Stromnetz angebunden. In der ersten Kammer 4 liegt ein Katholyt 10 vor. Der erste Tank 6 dient dabei als Vorratstank für den Katholyt 10.

Die erste Pumpe 8 pumpt den Katholyt 10 durch die erste Kammer 4 und den ersten Tank 6. Weiterhin pumpt die erste Pumpe 8 den Katholyt 10 durch einen Wärmetauscher 20. In der zweiten Kammer 5 liegt ein Anolyt 11 vor. Dieser wird in den zweiten Tank 7 bevorratet. Die zweite Pumpe 9 pumpt den Anolyt 11 durch die zweite Kammer 5. Der Anolyt könnte ebenfalls (hier nicht dargestellt) durch einen Wärmetauscher gepumpt werden.

Weiterhin umfasst die Redox-Flow-Einheit 2 eine Wärmeausgleichsvorrichtung 24. Zusätzlich kann die erste Kammer 4 ein zweite Heizelement 26 und die zweite Kammer 5 ein erstes Heizelement 25 umfassen. Typischerweise liegt als Energieträger ein Polyoxometallat in dem Elektrolyt, also dem Anolyt 11 und/oder Katholyt 10, vor.

Ist nun elektrische Überschussenergie aufgrund von Überschuss - Windenergie sowie Sonnenenergie im Stromnetz vorhanden, so kann einerseits die Redox-Flow-Batterie 1 aufgeladen werden. Zusätzlich kann die erste Kammer 4 und/oder die zweite Kammer 5 über das zweite Heizelement 26 und/oder das erste Heizelement 25 aufgeheizt werden. Die Wärmeausgleichseinheit 24 sorgt dafür, dass beide dieselbe Temperatur annehmen. Auch die Membran 3 kann als Wärmeausgleichseinheit 24 dienen, da sie sowohl in Kontakt mit dem Anolyt 11 als auch dem Katholyt 10 steht. Diese Wärmeausgleichseinheit 24 ist insbesondere dann zweckmäßig, wenn nur ein Heizelement 25, 26 vorhanden ist oder nur ein Heizelement 25, 26 betrieben wird. Alternativ ist ebenso denkbar, dass kein Heizelement 25, 26 vorhanden ist, sondern die Temperatur des Elektrolyts lediglich dadurch erhöht wird, dass die Redox-Flow-Batterie 1 nicht gekühlt wird.

Typischerweise liegt die Temperatur des Elektrolyts in einem Temperaturbereich in der Redox-Flow-Batterie 1 vor. Die erste untere Temperatur des Temperaturbereichs beträgt 10°C, insbesondere auch 30 °C, insbesondere 40 °C, insbesondere 50 °C. Die zweite obere Temperatur des Temperaturbereichs des Elektrolyts beträgt 40 °C, insbesondere 60 °C oder 70 °C. Zweckmäßigerweise sollte die zweite Temperatur oberhalb der ersten Temperatur liegen.

Als ein Heizelement kann insbesondere auch ein Heizstab verwendet werden.

Die erhöhte Temperatur des Katholyts 10 wird dann ausgenutzt, indem der Katholyt 10 selbst in einen Wärmetauscher 20 geführt wird. Der Katholyt 10 dient demnach direkt als Wärmeübertragungsmedium. Damit kann ein weiteres Fluid, insbesondere Wasser 22 vorgewärmt werden zu warmem Wasser 23. Dieser Warmwasserstrom 23 kann dann insbesondere in ein Heizsystem 21 zugeführt werden.

Vorteilhaft wird dadurch der Wirkungsgrad der gesamten Redox-Flow-Batterie 1 vorteilhaft erhöht. Es ist ebenso denkbar, dass im Anolyt-Kreislauf ein zusätzlicher Wärmetauscher vorhanden ist, sodass man auch hier die Wärmemenge entnehmen kann.

Insbesondere wenn nur auf einer der beiden Elektrolytseiten Wärme hinzu geführt oder Wärme abgeführt wird, ist die Wärmeausgleichseinheit 24 wichtig, um eine gleichmäßige Temperaturverteilung über die Redox-Flow-Batterie 1 zu gewährleisten.

Die erhöhte Temperatur im Elektrolyt begünstigt auch die Effizienz der elektrochemischen Speicherung von Energie in der Redox-Flow-Batterie 1. Mittels einer Steuervorrichtung können basierend auf Effizienzkurven der Redox-Flow-Batterie 1 zwischen der direkten Einbringung von Wärme durch ein Heizelement und der gleichzeitigen elektrischen Einbringung von elektrischer Leistung gezielt gesteuert werden, um den Wirkungsgrad der Redox-Flow-Batterie 1 vorteilhaft zu erhöhen.

### Bezugszeichenliste

- 1: Redox-Flow-Batterie
- 2: Redox-Flow-Einheit
- 3: Membran
- 4: erste Kammer
- 5: zweite Kammer
- 6: erster Tank
- 7: zweiter Tank
- 8: erste Pumpe
- 9: zweite Pumpe
- 10: Katholyt
- 11: Anolyt
- 12: Elektroenergieanbindung
- 17: Kathode
- 18: Anode
- 20: Wärmetauscher
- 21: Heizung
- 22: Heizmedium, insbesondere Wasser
- 23: warmes Heizmedium
- 24: Wärmeausgleichseinheit
- 25: erstes Heizelement
- 26: zweites Heizelement

## Patentansprüche

1. Verfahren zum Betreiben einer Redox-Flow-Batterie (1), mit folgenden Schritten:
- Bereitstellen einer Redox-Flow-Batterie (1) umfassend eine erste Kammer (4) und eine zweite Kammer (5), wobei die erste Kammer (4) von der zweiten Kammer (5) von einer Membran (3) getrennt ist und wobei die erste Kammer (4) eine Kathode (17) umfasst und die zweite Kammer (5) eine Anode (18) umfasst und in der ersten Kammer (4) ein flüssiger Katholyt (10) vorliegt und in der zweiten Kammer (5) ein flüssiger Anolyt (11) vorliegt,
- Betreiben der Redox-Flow-Batterie (1) in einem Temperaturbereich mit einer ersten unteren Temperatur und einer zweiten oberen Temperatur,
- Thermisches Beladen oder Entladen des Katholyts (10) und/oder des Anolyt (11) innerhalb des Temperaturbereichs mittels eines Prozesses (21).

2. Verfahren nach Anspruch 1, wobei die erste untere Temperatur 20 °C und die zweite obere Temperatur 40 °C beträgt.

3. Verfahren nach Anspruch 1 oder 2, wobei die erste untere Temperatur 40 °C und die zweite obere Temperatur 60 °C beträgt.

4. Verfahren nach einem der vorhergehenden Ansprüche, wobei die erste untere Temperatur 50 °C und die zweite obere Temperatur 70 °C beträgt.

5. Verfahren nach einem der vorhergehenden Ansprüche, wobei die erste untere Temperatur minimal 10 °C und die zweite obere Temperatur maximal 70 °C beträgt.

6. Verfahren nach einem der vorhergehenden Ansprüche wobei der Temperaturbereich 20 K umfasst.

7. Verfahren nach einem der vorhergehenden Ansprüche, wobei eine Temperatur innerhalb des Temperaturbereichs mittels eines Heizverfahrens (25, 26) erzeugt wird.

8. Verfahren nach Anspruch 7, wobei das Heizverfahren mit elektrischer Überschussenergie betrieben wird.

9. Verfahren nach einem der vorhergehenden Ansprüche, wobei der Katholyt (10) und/oder der Anolyt (11) ein Polyoxometallat als Energieträger umfasst.

10. Verfahren nach einem der vorhergehenden Ansprüche, wobei als der Prozess das Heizen oder das Kühlen eines Gebäudes (21) oder das Kühlen einer Photovoltaikanlage durchgeführt wird.

11. Wiederaufladbare Redox-Flow-Batterie (1) umfassend:
- eine ersten Kammer (4) und eine zweiten Kammer (5), wobei die erste Kammer (4) von der zweiten Kammer (5) von einer Membran (3) getrennt ist und wobei die erste Kammer (4) eine Kathode (17) umfasst und die zweite Kammer (5) eine Anode (18) umfasst und in der ersten Kammer (4) ein flüssiger Katholyt (10) vorliegt und in der zweiten Kammer (5) ein flüssiger Anolyt (11) vorliegt, und die Redox-Flow-Batterie (1) geeignet ist, in einem Temperaturbereich mit einer ersten unteren Temperatur und einer zweiten oberen Temperatur betrieben zu werden,
- mit einer Wärmeübertragungsvorrichtung (20) zum thermischen Beladen oder Entladen der Redox-Flow-Batterie (1) mittels eines Prozesses (21) innerhalb des Temperaturbereichs.

12. Wiederaufladbare Redox-Flow-Batterie (1) gemäß Anspruch 11, wobei die Wärmeübertragungsvorrichtung (20) ein Wärmetauscher ist und der Wärmetauscher fluidisch verbunden ist mit der ersten Kammer (4) und/oder der zweiten Kammer (5).

13. Wiederaufladbare Redox-Flow-Batterie (1) gemäß Anspruch 11 oder 12, wobei das Volumen der ersten und/oder zweiten Kammer (4, 5) in einem Bereich von 0,2 m³ bis 1.000.000 m³ liegt.

14. Wiederaufladbare Redox-Flow-Batterie (1) gemäß Anspruch einem der Ansprüche 11 bis 13, wobei das Volumen der ersten und/oder zweiten Kammer (4, 5) in einem Bereich von 0,5 m³ bis 100.000 m³ liegt.

15. Verwendung einer Redox-Flow-Batterie (1) gemäß Anspruch 11 als thermischer und elektrischer Speicher.
